(19) Europäisches Patentamt
European Patent Office
Office européen des brevets

(11) Publication number: **0 440 588 A1**

(12) **EUROPEAN PATENT APPLICATION**

(21) Application number: **91830013.8**

(22) Date of filing: **22.01.91**

(51) Int. Cl.⁵ : **G05B 19/42**

(30) Priority: **02.02.90 IT 6708290**

(43) Date of publication of application: **07.08.91 Bulletin 91/32**

(84) Designated Contracting States: **DE ES FR GB SE**

(71) Applicant: **FIAT AUTO S.p.A.**
**Corso Giovanni Agnelli 200**
**I-10135 Torino (IT)**

(72) Inventor: **Nicola, Gian Luigi**
**Via Prinepessa Clotilde 30**
**I-10144 Torino (IT)**

(74) Representative: **Bosotti, Luciano et al**
**c/o Jacobacci-Casetta & Perani S.p.A. Via Alfieri, 17**
**I-10121 Torino (IT)**

(54) **A system for monitoring the parameters of movement of industrial robots and the like.**

(57) An inertial gyroscopic platform (13) is mounted on the pincer (10) of the robot (1) and can detect precise values of acceleration on its three principal axes and the gyroscopic component so as to detect the angular component.

FIG. 1

EP 0 440 588 A1

# A SYSTEM FOR MONITORING THE PARAMETERS OF MOVEMENT OF INDUSTRIAL ROBOTS AND THE LIKE

The present invention relates to systems for monitoring the parameters of movement (acceleration, velocity, position - linear and angular) of an object in space and has been developed with particular attention to the problem of monitoring such movement parameters in industrial robots and like devices (manipulators, etc.).

Particularly in applications in the field of industrial robotics, the detection of actual kinematic and geometric parameters of the movable end members (so-called "end-effectors") in real time is a problem during normal working cycles and without re-equipment of the production area concerned, whatever the type of movement being executed. The data in question, after subsequent processsing, are essential for optimising the use of the robot, for checking its correct application, and for obtaining characterising parameters when off-line programming is carried out by means of CAD environment simulators.

It is known, in the art, to solve this problem by televisual means for example, with the use of two television cameras arranged in a known geometrical configuration so as to monitor the position - and hence the parameters of movement - of a target or reference mounted on the robot's wrist. The spatial data provided by the two television cameras are processed to give three-dimensional information.

This solution has many disadvantages due, for example, to the fact that the precision of the data picked up depends on the operating frequency (clock) of the system (which is generally fixed) as well as on the precision of positioning of the television cameras, that is on the need to provide a certain amount of space in order to achieve significant results (an average working space and a speed of approximately 1 meter/second give values which are no longer significant). In general, this type of solution is difficult to use, particularly in a workshop.

Monitoring by means of laser interferometry is also known. This solution is limited by the fixed number of values which can be detected during an acquisition cycle and by the fact that its possible use is limited to straight-line movements with only slight deviations about the measurement axis (plus or minus about 15 mm), which limitations make its use in the field extremely difficult or onerous, at the very least.

The object of the present invention is to provide a system for monitoring the parameters of movement of a movable member, such as the wrist of a robot, which does not give rise to the problems quoted above and which can be used easily and cheaply even in difficult and/or hostile situations, such as those of a workshop.

According to the present invention, this object is achieved by virtue of a system having the characteristics called for specifically in the claims which follow.

Essentially, in order to monitor the parameters of movement of a movable member, such as a robot's wrist, the solution according to the invention provides for the use of an inertial gyroscopic platform (preferably of the stabilised type) which can detect precise values of acceleration on its three main axes and the gyroscopic component (the angular component) of the wrist. These values, when digitalised, constitute the data base for subsequent integrations from which the parameters of velocity and of position can be derived.

The invention will now be described, purely by way of non-limiting example, with reference to the appended drawings, in which :

Figure 1 shows, essentially, the structure of an industrial robot provided with a monitoring system according to the invention, and

Figure 2 shows, in block diagrammatic form, the structure of one of the basic parts of the system according to the invention.

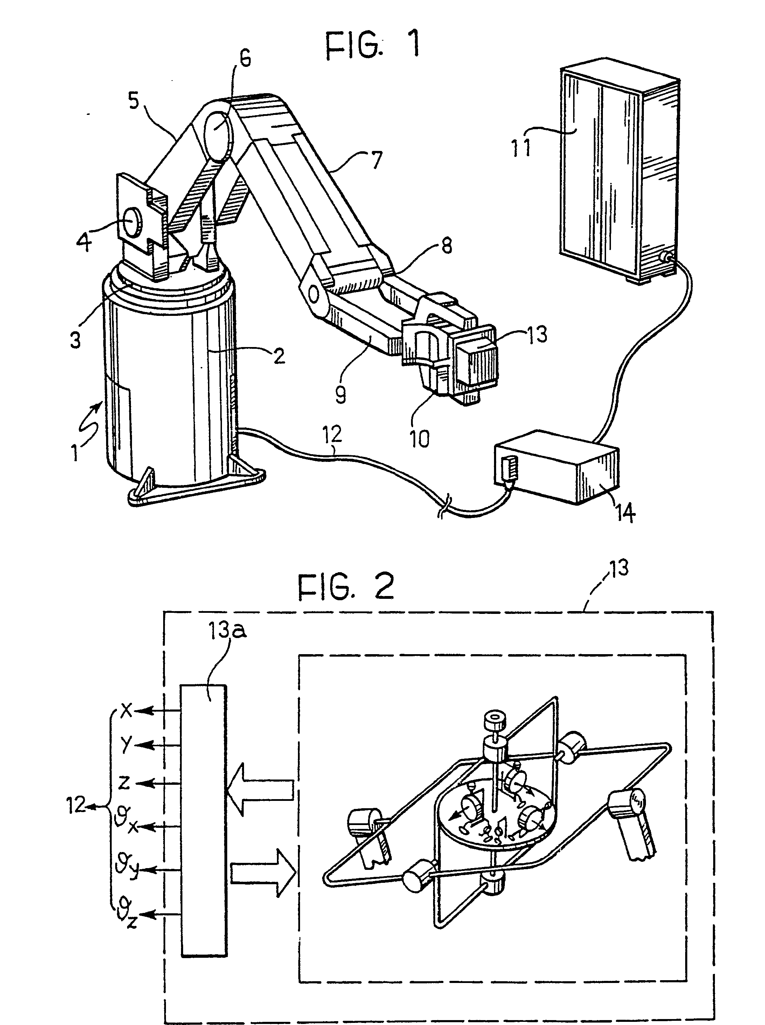

In Figure 1, an industrial robot (automaton) is generally indicated 1.

This is a device widely known in the art which does not need to be described in detail here.

Essentially, in one possible embodiment, such a robot includes essentially a base 2 on which a platform 3 is mounted for rotation about a vertical axis. A first arm 5 is mounted on the platform 3 so as to be able to rotate about a horizontal axis 4 and in turn supports a second arm 7 which can rotate about a horizontal axis 6. The free end of the arm 7 in a substantially similar manner supports an end arm 9 which can rotate about a further horizontal axis 8 and which carries at its free end a movable element (end-effector) 10 which may be arranged in various configurations (gripping pincer, welding pincer, spray-paint gun, laser unit for heat treatments, etc.) according to the specific needs of operation.

Naturally, the general structure of the robot may also be different from that shown : for example, it may be a so-called cartesian robot with a portal structure or a robot with a larger or smaller number of axes of movement/rotation.

In general, the movement of the robot is controlled automatically by a programmable unit (computer) 11 connected to the body of the robot by a connecting cable 12. The criteria for the production of the control computer 11 should also be considered as widely known in the art and such as not to require detailed description here.

In general, the end member or wrist whose parameters of movement are to be detected can move in a three-dimensional space (axes x, y and z) and can rotate about three axes, a roll axis, a pitch axis and a yaw axis ($\vartheta$x, $\vartheta$y, $\vartheta$z).

The following description is made with reference to the most general possible use : naturally, it is understood that the description also applies, with obvious simplifications, to situations in which there are fewer axes of movement and rotation (that is degrees of freedom of the system).

The main characteristic of the solution according to the invention lies in the use of an inertial gyroscopic platform 13 for detecting the parameters of movement of the wrist 10, the platform being mounted on the wrist so as to be firmly fixed thereto.

In other words, the solution of the invention is inspired by the concept, which is well-known in the aeronautical field, that the detection of the kinematic parameters of an object in motion in space, with a view to the use of the detected data to define the spatial coordinates of the object relative to an external reference system, but without connection to the reference system itself, can be achieved with great precision by an inertial gyroscopic platform.

The structure of such a gyroscopic platform is shown schematically in Figure 2.

Such a platform, whose structure can be considered widely known in the art, generally provides for the use of gyroscopes (for example three gyroscopes each with one degree of freedom for providing output data $\vartheta$x, $\vartheta$y, $\vartheta$z relating to rotation about three axes x, y and z) and a corresponding plurality of accelerometers with output data relating to components of the acceleration about the axes of movement x, y, z.

The platform 13 as a whole consists of a mechanical part (gyroscopes and accelerometers mounted, in the case of a stabilised inertial platform, on a rigid system, known as the stable element, which is free to rotate with three degrees of freedom relative to the movable member and is kept in a fixed orientation relative to the external reference system) and an electronic processing part 13a for receiving the signals from the gyroscopes and the accelerometers in order to process them (amplification, digitalisation, integration, etc.) and also, for example, for providing the necessary inputs for the operation of the torque generators of the gyroscopes.

The processing unit 13a may be integrated with the mechanical part of the platform in an autonomous unit which assumes the character of a true black box, and provides, directly through the cable 12, signals indicative of the geometrical parameters in a form immediately usable for subsequent processing.

In this respect, various operative solutions can be envisaged. The solution currently considered preferable provides for an initial operating stage in which the movement data detected by the platform, integrated with strobe data provided by the computer 11, are stored in a data storage module 14.

In a subsequent stage, after suitable transfer of the stored data and with the use of another calculating unit (which may even not be connected to the computer 11), the data are processed and subsequently analysed.

With this configuration, the robot control unit 11 intervenes solely to provide strobe signals.

If the data integration software and/or the calculating capacity of the processor 11 permit, however, the data provided by the platform 13 may be supplied directly to the computer 11.

This solution should, therefore, also be considered to be included within the scope of the present invention.

Finally, at least in principle, a solution which provides for the partial or total integration of the processing unit 13a within the computer 11 is also possible.

Furthermore, it is well known that, although it is prefered for the inertial platform 13 to be located as near as possible to (ideally coincident with) the point about which the wrist is oriented, it could be located in a position spaced therefrom, the condition of solidarity with the wrist being maintained, without creating particular problems as regards the detection, since the exact position of the wrist can be derived from suitable displacements of the coordinates.

Finally, it should be stated that, in Figure 2 (the left-hand part), the parameters of movement generated by the gyroscopic platform (13) have been indicated generally as x, y and z (translations) and $\vartheta$x, $\vartheta$y, $\vartheta$z (rotations), this notation generally being intended to indicate both the parameters of acceleration $\ddot{X}_I$, $\ddot{Y}$, $\ddot{Z}$, $\ddot{\vartheta}x$, $\ddot{\vartheta}y$, $\ddot{\vartheta}z$, and the parameters of velocity $\dot{X}$, $\dot{Y}$, $\dot{Z}$, $\dot{\vartheta}x$, $\dot{\vartheta}y$, $\dot{\vartheta}z$, as well as the parameters of position x, y, z, $\vartheta$x, $\theta$y, $\vartheta$z proper, which are obtained by subsequent integration processes.

The solution described, which makes use of a sensor system which can be mounted on the robot and connected to the data storage system 14 (or possibly to the computer 11) by means of the electric cable 12, enables the desired data to be detected with minimal impact on the area concerned. The proper operation of the system in every conceivable working cycle is ensured by the fact that the sensor element (that is the intertial gyroscopic platform 13) interacts with its electronic unit through an individual electrical connection which, inter alia, makes the system suitable for use in difficult environments or evironments affected by barriers, covers or obstacles since it provides the desired parameters by a direct route.

The precision of the data provided is absolute and is related to the class of instrument, (that is the intrinsic precision of the inertial gyroscopic platform 13 which, based on experience acquired in the aeronautical sector, may be selected within a wide range of qualities and costs in dependence on the specific requirements of use) but is not related to the physical size of the phenomenon detected.

Similarly, the data provided by the platform 13 can be processed with maximum flexibility so as to enable the sensor-recorder system to be configured in such a way as to ensure the practicality of its use in the operating environment, so as to optimise the storage of a large amount of data and so as to free the data-analysis software from too rigid a configuration.

In particular, the signals generated by the inertial platform 13 can be converted immediately into digital form (by means of an analog/digital converter of known type, not shown) to facilitate the subsequent integration processes which provide the velocity and position data and make them more precise, avoiding any possible problems with drift, offset, etc.

It will therefore be understood that the only limit on the scanning rate of the system is the frequency at which the signals produced by the sensors are sampled. These signals can be stored in a suitable support for subsequent use, for example for sequencing with the cycle under control by means of strobe signals generated in the computer 11 which controls the robot 1. If the time base is known, it is possible for processing software to process the precise data as a function of the entire path of movement envisaged. Moreover, it is possible to calculate the incremental changes in position relative to the starting point. If the starting point is known, the position increments can be converted into absolute positions, thus providing a continuous trace of the path actually followed. All this is achieved with the aid of known algorithms and programs.

Naturally, the principle of the invention remaining the same, the details of construction and forms of embodiment may be varied widely with respect to those described and illustrated, without thereby departing from the scope of the present invention.

## Claims

1. A system for monitoring the parameters of movement of a movable member (10) in industrial robots (1) or the like, characterised in that it comprises an inertial gyroscopic platform (13) mounted on the movable member (10) in order to generate signals indicative of the parameters of movement (x, y, z, 9x, 9y, 9z).

2. A system according to Claim 1, characterised in that the inertial gyroscopic platform (13) is of the stabilised type.

3. A system according to Claim 1 or Claim 2, characterised in that the movable member is the wrist (10) of an industrial robot.

4. A system according to any one of the preceding claims, characterised in that the inertial gyroscopic platform (13) first generates the signals in the form of acceleration signals ($\ddot{x}$, $\ddot{y}$, $\ddot{z}$, $\ddot{9}$ x, $\ddot{9}$ y, $\ddot{9}$ z) and in that computer means (11, 13a) are provided which can integrate the acceleration signals in order to obtain corresponding velocity and/or position signals therefrom.

5. A system according to any one of Claims 1 to 4, characterised in that analog/digital converter means are associated with the inertial gyroscopic platform (13) for converting the signals generated by the inertial gyroscopic platform, which are indicative of the parameters of movement, into digital signals.

6. A system according to any one of the preceding claims, characterised in that it includes a storage unit (14) for storing the signals generated by the inertial gyroscopic platform (13) for subsequent processing.

7. A system according to Claim 6, for controlling a robot (1) or the like, provided with a respective control unit (11), characterised in that the storage unit (14) is generally separate from the control unit (11).

8. A system according to Claim 6 and Claim 7, characterised in that the storage unit (14) is arranged to receive strobe signals from the control unit (11), for example during the storage of the signals generated by the platform.

# FIG. 1

# FIG. 2

**European Patent Office**

# EUROPEAN SEARCH REPORT

Application Number

EP    91 83 0013

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2357942 (REGIE NATIONALE DES USINES RENAULT)<br>* the whole document *<br>----- | 1-8 | G05B19/42 |
|  |  |  | **TECHNICAL FIELDS SEARCHED (Int. Cl.5)**<br><br>G05B |

The present search report has been drawn up for all claims

| Place of search | Date of completion of the search | Examiner |
|---|---|---|
| THE HAGUE | 07 MAY 1991 | CORNILLIE O.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)